# EUROPEAN PATENT SPECIFICATION

(11) **EP 3 972 098 B1**
(45) Date of publication and mention of the grant of the patent: **26.07.2023**
(21) Application number: 20460038.1
(22) Date of filing: 17.09.2020
(51) Int. Cl.: H02K 15/12, H02K 1/18, H02K 7/00

(54) **ARRANGEMENT FOR AN ELECTRIC MACHINE WITH IMPROVED RESIN FILLING FOR STATOR WINDINGS**
ANORDNUNG FÜR EINE ELEKTRISCHE MASCHINE MIT VERBESSERTER HARZFÜLLUNG FÜR STATORWICKLUNGEN
AGENCEMENT POUR UNE MACHINE ÉLECTRIQUE DOTÉ D'UN REMPLISSAGE DE RÉSINE AMÉLIORÉ POUR ENROULEMENTS DE STATOR

(43) Date of publication of application: 23.03.2022
(73) Proprietor: Valeo eAutomotive Germany GmbH, 91056 Erlangen (DE)
(72) Inventor: Tomiczek, Robert, 43-300 Bielsko-Biala (PL); Kirchner, Barbara, 97618 Rödelmaier (DE); Günther, Rebecca, 97714 Oerlenbach (DE); Menz, Michael, 97618 Hollstadt (DE); Dörmer, Thomas, 98596 Brotterode-Trusetal (DE)

(56) References cited:
- EP-A2- 2 587 635
- DE-T5-112015 007 031

## Description

### TECHNICAL FIELD

The invention relates to an arrangement for an electric machine, a method of manufacturing such an arrangement, an electric machine with such an arrangement and a vehicle with such an electric machine.

### BACKGROUND ART

Usually, the gaps in the stator windings of a stator of an electric machine are filled with a resin so as to protect the stator windings against unfavorable environmental conditions and to provide more mechanical stability for the stator windings. For this reason, the arrangement comprising a housing and a stator arranged therein is filled with the liquid resin, which is cured afterwards, wherein superfluous resin is drained before. Unfortunately, this draining usually does not function to a 100% so that residues of the resin remain in unwanted places. One of these places is a gap, which is formed between a stopper, which is to define an axial position of a stator within the housing, and a stator end disc, which is arranged on the axial end of the stator lamination stack to protect the stator windings. Unfortunately, the cured resin, which is used to fill the stator windings gaps, tends to break if areas of the same become too large. Accordingly, crumbs of this cured resin may be distributed within the electric machine in an uncontrolled manner, potentially spoiling a proper function of the electric machine. An electric motor according to the preamble of claim 1 is disclosed in EP 2587635 A2 and in DE 11 2015 007031 T5.

### DISCLOSURE OF INVENTION

Accordingly, an object of the invention is the provision of an improved arrangement for an electric machine, an improved method of manufacturing such an arrangement, an improved electric machine with such an arrangement and an improved vehicle with such an electric machine. In particular, the aforementioned problems shall be avoided.

The object of the invention is solved by an arrangement for an electric machine, which comprises a housing with a stopper to define an axial position of a stator within the housing and the stator arranged in the housing, wherein the stator comprises a stator lamination stack, stator windings arranged in the stator lamination stack and a stator end disc arranged on the axial end of the stator lamination stack. In the mounted state, the stator lamination stack on the axial end, on which the stator end disc is arranged, is in body contact with the stopper on an area facing the stator lamination stack in axial direction. The stopper has an annular shape thereby providing a radial gap between the stopper and the stator end disc.

In particular, the radial gap between the stopper and the stator end disc and gaps in the stator are filled with one and the same resin.

Moreover, the object of the invention is solved by a method of manufacturing an arrangement for an electric machine, comprising the steps of
- providing a housing with a stopper to define an axial position of a stator within the housing,
- providing the stator, comprising a stator lamination stack, stator windings arranged in the stator lamination stack and a stator end disc arranged on the axial end of the stator lamination stack,
- arranging the stator in the housing, wherein the stator lamination stack on the axial end, on which the stator end disc is arranged, gets in body contact with the stopper on an area facing the stator lamination stack in axial direction,
- flooding the interior of the arrangement with a resin,
- draining the resin, wherein a radial gap between the stopper, which has an annular shape, and the stator end disc remains filled with the resin and
- curing the resin.

In addition, the object of the invention is solved by an electric machine, which has an arrangement of the above kind or an arrangement, which is produced as disclosed above, and a rotor, which is rotatably mounted in said arrangement.

Finally, the object of the invention is solved by a vehicle with at least two axles, of which at least one is driven by an electric machine as disclosed above at least partially or temporarily.

By the above measures, a radial gap between the stopper and the stator end disc of substantially constant thickness is provided. In contrast, the thickness of a gap between a stopper and a stator end disc is not constant in prior art designs because the stopper is not annular there and just local stoppers are used instead. So, although complete draining of the resin cannot be assured either by the proposed measures, the cured resin does not break because there are no large clusters of the cured resin. Hence, no crumbs of the resin get into the electric machine so that the aforementioned problems are avoided.

Advantageously, the size of the gap between the stopper and the stator end disc is b ≤ 2,5 mm, in particular b ≤ 1,7 mm, preferably b ≤ 1,5 mm. In this way, breaking of the cured resin can reliably be avoided.

### BRIEF DESCRIPTION OF DRAWINGS

The invention now is described in more detail hereinafter with reference to particular embodiments, which the invention however is not limited to.
- Fig. 1: schematically shows an electric machine in half sectional view;
- Fig. 2: a stator lamination pack in front view;
- Fig. 3: a state during the production process, in which the stator is moved into the housing;
- Fig. 4: a state during the production process, in which the stator has reached its final position within the housing;
- Fig. 5: a state during the production process, in which the arrangement formed by the housing and the stator is flooded with a resin;
- Fig. 6: a state during the production process, in which the resin is drained of the arrangement of Fig. 5 and
- Fig. 7: a schematic view on a vehicle with the proposed electric machine.

### DETAILED DESCRIPTION

Generally, same parts or similar parts are denoted with the same/similar names and reference signs. The features disclosed in the description apply to parts with the same/similar names respectively reference signs. Indicating the orientation and relative position (up, down, sideward, etc) is related to the associated figure, and indication of the orientation and/or relative position has to be amended in different figures accordingly as the case may be.

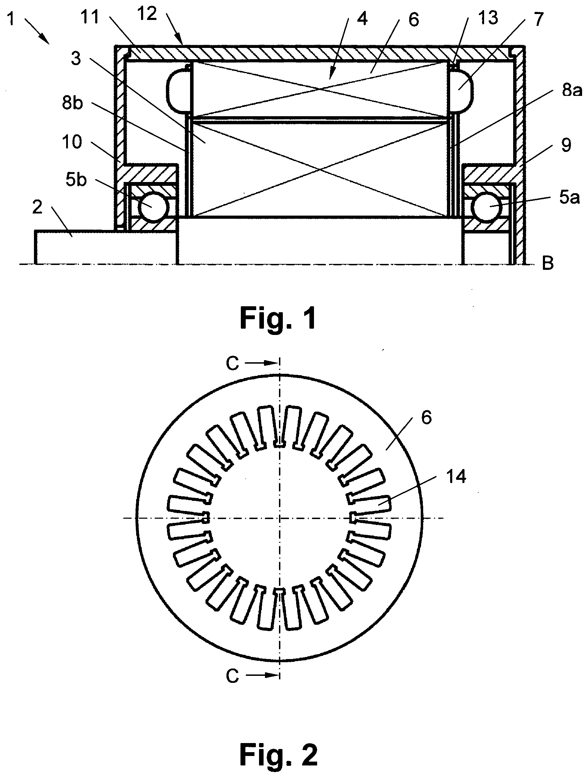

Fig. 1 shows a half sectional view of a schematic electric machine 1. The electric machine 1 comprises a shaft 2 with a rotor 3 mounted thereon, wherein the shaft 2 is rotatably mounted around a rotational axis B in relation to a stator 4 by means of (ball)bearings 5a, 5b. The rotor 3 in particular comprises rotor laminations and rotor magnets or rotor windings, which are not shown in detail in Fig. 1. The stator 4 in particular comprises stator laminations (not shown in detail in Fig. 1 either), which form a stator lamination stack 6, and stator windings 7. Moreover, the stator 4 comprises stator end discs 8a, 8b which protect the stator windings 7. These stator end discs 8a, 8b may have an annular shape and may be made of plastics.

In the example shown in Fig. 1, the first bearing 5a is arranged in a first housing part 9 and the second bearing 5b is arranged in a second housing part 10. Further on, a middle housing part 11, which accommodates the stator 4, is arranged between the first housing part 9 and the second housing part 10. The first housing part 9, the second housing part 10 and the middle housing part 11 are part of a motor housing 12.

To define an axial position of the stator 4 within the housing 12, the middle housing part 11 comprises a stopper 13. For this reason, the stator lamination stack 6 is in body contact with the stopper 13 in its mounted position. In detail, the stator lamination stack 6 on the axial end, on which the stator end disc 8a is arranged, is in body contact with the stopper 13 on an area facing the stator lamination stack 6 in axial direction.

Fig. 2 shows a front view of the stator lamination stack 6 without the stator windings 7. Thus, the grooves 14 in the stator lamination stack 6, which receive the stator windings 7 are visible in Fig. 2. Moreover, Fig. 2 indicates a plane CC for a cross sectional view.

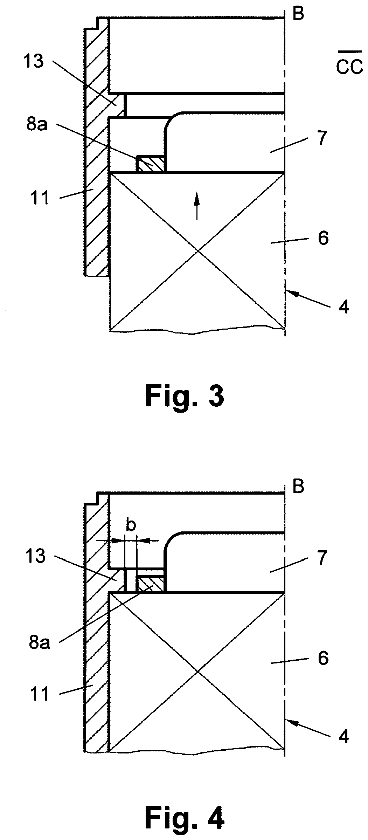

Figs. 3 to 6 now schematically show the production process of an arrangement for the electric machine 1, comprising the housing (strictly speaking comprising the middle housing part 11) and the stator 4. For producing the arrangement, the same is turned by 90° compared to Fig. 1 so that the rotational axis B is vertically oriented. Figs. 3 to 6 show half sectional views along the plane CC.

Fig. 3 shows a state, in which the stator 4 is moved into the middle housing part 11 from the bottom side.

Fig. 4 shows a state, in which the stator lamination stack 6 on the axial end, on which the stator end disc 8a is arranged, got in body contact with the stopper 13 on an area facing the stator lamination stack 6 in axial direction. This is the final axial position of the stator lamination stack 6. As is visible in Fig. 4 in detail, the stopper 13 has an annular shape thereby providing a radial gap b between the stopper 13 and the stator end disc 8a.

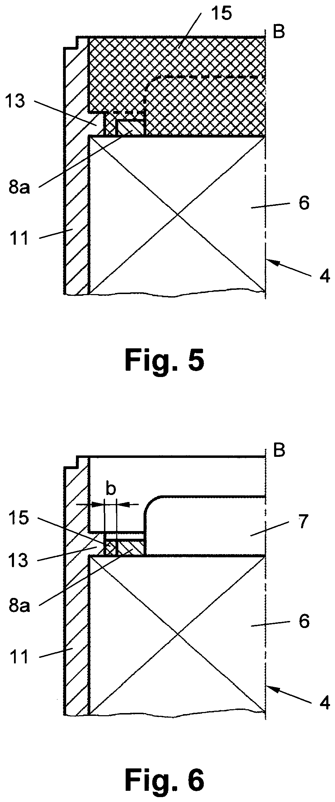

In a next productions step, which is shown in Fig. 5, the interior of the arrangement is flooded with a liquid resin 15. The primary reason is to fill gaps in the stator windings 7 and to wet the same with the resin 15 so as to protect the stator windings 7 against unfavorable environmental conditions and to provide more mechanical stability for the stator windings 7. However, as can be seen, also other parts of the arrangement are wetted with the resin 15 as well.

In a next production step, the resin 15 is drained again. The state after the resin 15 has been drained is shown in Fig. 6. As can be seen, the radial gap b between the stopper 13 and the stator end disc 8a remains filled with the resin 15. Finally, the resin 15 is cured.

So, summarizing the method of manufacturing said arrangement for the electric machine 1, comprises the steps of
- providing a housing 12 with a stopper 13 to define an axial position of a stator 4 within the housing 12 (in detail, just middle housing part 11 of the housing 12 is provided in Figs. 3 to 6),
- providing the stator 4, comprising a stator lamination stack 6, stator windings 7 arranged in the stator lamination stack 6 and a stator end disc 8a arranged on the axial end of the stator lamination stack 6,
- arranging the stator 4 in the housing 12, wherein the stator lamination stack 6 on the axial end, on which the stator end disc 8a is arranged, gets in body contact with the stopper 13 on an area facing the stator lamination stack 6 in axial direction,
- flooding the interior of the arrangement with a resin 15,
- draining the resin 15, wherein the radial gap b between the stopper 13, which has an annular shape, and the stator end disc 8a remains filled with the resin 15 and
- curing the resin 15.

In particular, the radial gap b between the stopper 13 and the stator end disc 8a and gaps in the stator 4 are filled with one and the same resin 15. This may lead to problems if no countermeasures are taken. The reason is that the resin 15 because of its characteristics for providing its primary function of filling gaps in the stator windings 7 tends to break if the gaps are too large. Accordingly, crumbs of the cured resin 15 may be distributed within the electric machine 1 in an uncontrolled manner and foil a proper function of the electric machine 1. It is also hard to impossible to take care that the gap b between the stopper 13 and the stator end disc 8a gets drained completely, when the resin is drained 15. Instead, tests have shown that residues of the resin 15 may still remain in the gap b and cause the aforementioned problems.

So, first it is advantageous if the stopper 13 has an annular shape so that a radial gap b between the stopper 13 and the stator end disc 8a of constant thickness is provided. In contrast, the thickness of a gap between a stopper and a stator end disc is not constant in prior art designs because the stopper is not annular there and just local stoppers are usually used instead.

Second, it is of advantage if the size of the gap b is b ≤ 2,5 mm, in particular b ≤ 1,6 mm and preferably b ≤ 1,5 mm. In this way, the resin 15 remaining the radial gap b between the stopper 13 and the stator end disc 8a is small enough so that it does not break. Accordingly, no crumbs of the cured resin 15 get into other regions of the electric machine 1 in an uncontrolled manner.

So, the proposed measures provide an easy and reliable method to avoid the aforementioned problems.

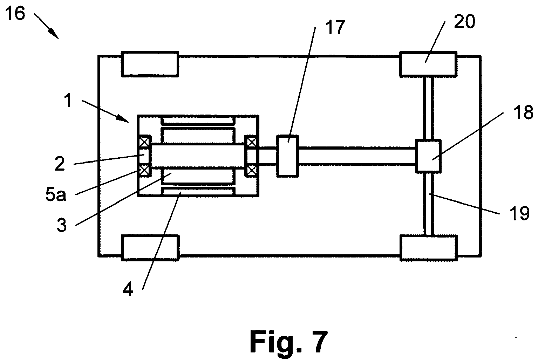

Finally, Fig. 7 schematically shows a vehicle 16, which has two axles in this example, with the proposed electric machine 1. In detail, the vehicle 16 comprises the electric machine 1, which is connected to a gear 17 and to a differential gear 18. The vehicle 16 moreover comprises semiaxes 19 connected to the differential gear 18 and wheels 20 connected to the semiaxes 19. The electric machine 1 is provided for propelling the vehicle 16 at least partially or temporarily, in this example by driving one of the axles.

Furthermore, it is noted that the invention is not limited to the embodiments disclosed hereinbefore, but combinations of the different variants are possible. In reality, the arrangement, the electric machine and the vehicle 16 may have more or less parts than shown in the figures. Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

## Claims

1. Arrangement for an electric machine (1), comprising
- a housing (12) with a stopper (13) to define an axial position of a stator (4) within the housing (12),
- the stator (4) arranged in the housing (12), wherein the stator (4) comprises a stator lamination stack (6), stator windings (7) arranged in the stator lamination stack (6) and a stator end disc (8a, 8b) arranged on the axial end of the stator lamination stack (6),
- wherein the stator lamination stack (6) on the axial end, on which the stator end disc (8a, 8b) is arranged, is in body contact with the stopper (13) on an area facing the stator lamination stack (6) in axial direction,
**characterized in that**
- the stopper (13) has an annular shape and a radial gap (b) is provided between the stopper (13) and the stator end disc (8a, 8b).

2. Arrangement as claimed in claim 1, **characterized in that** the radial gap (b) between the stopper (13) and the stator end disc (8a, 8b) and gaps in the stator (4) are filled with one and the same resin.

3. Arrangement as claimed in claim 1, **characterized in that** the size of the gap (b) is b ≤ 2,5 mm, preferably b ≤ 1,5 mm.

4. Method of manufacturing an arrangement for an electric machine (1), comprising the steps of
- providing a housing (12) with a stopper (13) to define an axial position of a stator (4) within the housing (12),
- providing the stator (4), comprising a stator lamination stack (6), stator windings (7) arranged in the stator lamination stack (6) and a stator end disc (8a, 8b) arranged on the axial end of the stator lamination stack (6),
- arranging the stator (4) in the housing (12), wherein the stator lamination stack (6) on the axial end, on which the stator end disc (8a, 8b) is arranged, gets in body contact with the stopper (13) on an area facing the stator lamination stack (6) in axial direction,
- flooding the interior of the arrangement with a resin (15),
- draining the resin (15), wherein a radial gap (b) between the stopper (13), which has an annular shape, and the stator end disc (8a, 8b) remains filled with the resin (15) and
- curing the resin (15).

5. Electric machine (1), **characterized in** an arrangement according to any one of claims 1 to 3 and a rotor (3), which is rotatably mounted in said arrangement.

6. Vehicle (16) with at least two axles, of which at least one is driven, **characterized in that** the electric machine (1) of claim 5 is provided for driving the at least one axle at least partially or temporarily.

## Patentansprüche

1. Anordnung für eine elektrische Maschine (1), umfassend
- ein Gehäuse (12) mit einem Anschlag (13), um eine axiale Position eines Stators (4) innerhalb des Gehäuses (12) zu definieren,
- den im Gehäuse (12) angeordneten Stator (4), wobei der Stator (4) ein Statorblechpaket (6), im Statorblechpaket (6) angeordnete Statorwicklungen (7) und eine am axialen Ende des Statorblechpakets (6) angeordnete Statorendscheibe (8a, 8b) umfasst,
- wobei das Statorblechpaket (6) an dem axialen Ende, an dem die Statorendscheibe (8a, 8b) angeordnet ist, an einem dem Statorblechpaket (6) in axialer Richtung zugewandten Bereich in direktem Kontakt mit dem Anschlag (13) steht,
**dadurch gekennzeichnet, dass**
- der Anschlag (13) eine Ringform aufweist und ein radialer Zwischenraum (b) zwischen dem Anschlag (13) und der Statorendscheibe (8a, 8b) vorgesehen ist.

2. Anordnung gemäß Anspruch 1, **dadurch gekennzeichnet, dass** der radiale Zwischenraum (b) zwischen dem Anschlag (13) und der Statorendscheibe (8a, 8b) und Zwischenräume im Stator (4) mit ein und demselben Harz gefüllt sind.

3. Anordnung gemäß Anspruch 1, **dadurch gekennzeichnet, dass** die Größe des Zwischenraums (b) b ≤ 2,5 mm, vorzugsweise b ≤ 1,5 mm ist.

4. Verfahren zur Herstellung einer Anordnung für eine elektrische Maschine (1), umfassend die folgenden Schritte:
- Bereitstellen eines Gehäuses (12) mit einem Anschlag (13), um eine axiale Position eines Stators (4) innerhalb des Gehäuses (12) zu definieren,
- Bereitstellen des Stators (4), umfassend ein Statorblechpaket (6), im Statorblechpaket (6) angeordnete Statorwicklungen (7) und eine am axialen Ende des Statorblechpakets (6) angeordnete Statorendscheibe (8a, 8b),
- Anordnen des Stators (4) in dem Gehäuse (12), wobei das Statorblechpaket (6) an dem axialen Ende, an dem die Statorendscheibe (8a, 8b) angeordnet ist, an einem dem Statorblechpaket (6) in axialer Richtung zugewandten Bereich in Körperkontakt mit dem Anschlag (13) gelangt,
- Fluten des Inneren der Anordnung mit einem Harz (15),
- Ablassen des Harzes (15), wobei ein radialer Zwischenraum (b) zwischen dem ringförmigen Anschlag (13) und der Statorendscheibe (8a, 8b) mit dem Harz (15) gefüllt bleibt und
- Aushärten des Harzes (15).

5. Elektrische Maschine (1), **gekennzeichnet durch** eine Anordnung gemäß einem der Ansprüche 1 bis 3 und einen Rotor (3), der in der Anordnung drehbar gelagert ist.

6. Fahrzeug (16) mit mindestens zwei Achsen, von denen mindestens eine angetrieben ist, **dadurch gekennzeichnet, dass** die elektrische Maschine (1) gemäß Anspruch 5 zum mindestens teilweisen oder zeitweisen Antreiben der mindestens einen Achse vorgesehen ist.

## Revendications

1. Agencement pour une machine électrique (1), comprenant
un boîtier (12) doté d'une butée (13) pour définir une position axiale d'un stator (4) à l'intérieur du boîtier (12),
le stator (4) étant disposé dans le boîtier (12), le stator (4) comprenant un empilement de tôles de stator (6), des enroulements de stator (7) disposés dans l'empilement de tôles de stator (6) et un disque d'extrémité de stator (8a, 8b) disposé sur l'extrémité axiale de l'empilement de tôles de stator (6),
l'empilement de tôles de stator (6) à l'extrémité axiale, sur lequel le disque d'extrémité de stator (8a, 8b) est disposé, étant en contact avec la butée (13) sur une zone faisant face à l'empilement de tôles de stator (6) dans la direction axiale,
**caractérisé en ce que**
la butée (13) a une forme annulaire et un espace radial (b) existe entre la butée (13) et le disque d'extrémité de stator (8a, 8b).

2. Agencement selon la revendication 1, **caractérisé en ce que** l'espace radial (b) entre la butée (13) et le disque d'extrémité de stator (8a, 8b) et les espaces dans le stator (4) sont remplis d'une seule et même résine.

3. Agencement selon la revendication 1, **caractérisé en ce que** la taille de l'espace (b) est b ≤ 2,5 mm, de préférence b ≤ 1,5 mm.

4. Procédé de fabrication d'un dispositif pour une machine électrique (1), comprenant les étapes consistant à
fournir un boîtier (12) doté d'une butée (13) pour définir une position axiale d'un stator (4) à l'intérieur du boîtier (12),
fournir le stator (4), comprenant un empilement de tôles de stator (6), des enroulements de stator (7) disposés dans l'empilement de tôles de stator (6) et un disque d'extrémité de stator (8a, 8b) disposé sur l'extrémité axiale de l'empilement de tôles de stator (6),
disposer le stator (4) dans le boîtier (12), l'empilement de tôles de stator (6) sur l'extrémité axiale, sur laquelle le disque d'extrémité de stator (8a, 8b) est disposé, entre en contact avec la butée (13) sur une zone faisant face à l'empilement de tôles de stator (6) dans la direction axiale,
inonder l'intérieur de l'agencement avec une résine (15) ,
vidanger la résine (15), un espace radial (b) entre la butée (13), qui a une forme annulaire, et le disque d'extrémité de stator (8a, 8b) restant rempli de résine (15), et
faire durcir la résine (15).

5. Machine électrique (1), **caractérisée par** un agencement selon l'une quelconque des revendications 1 à 3 et un rotor (3) monté rotatif dans ledit agencement.

6. Véhicule (16) doté d'au moins deux essieux, dont au moins un est entraîné, **caractérisé en ce que** la machine électrique (1) selon la revendication 5 est fournie pour entraîner l'au moins un essieu au moins partiellement ou temporairement.
